# EUROPÄISCHE PATENTSCHRIFT

(11) **EP 0 473 920 B1**
(45) Veröffentlichungstag und Bekanntmachung des Hinweises auf die Patenterteilung: **26.10.1994**
(21) Anmeldenummer: 91112090.5
(22) Anmeldetag: 19.07.1991
(51) Int. Cl.: C08F 220/54, C08F 246/00, C08F 222/38, C09D 11/02

(54) **Wassereindickende Copolymere und deren Verwendung**
Thickening copolymers and their use
Copolymères epaississants et leur usage

(30) Priorität: 31.07.1990 DE 4024207
(43) Veröffentlichungstag der Anmeldung: 11.03.1992
(73) Patentinhaber: BASF Aktiengesellschaft, 67063 Ludwigshafen (DE)
(72) Erfinder: Konrad, Gerd, Dr., W-6703 Limburgerhof (DE); Hartmann, Heinrich, Dr., W-6703 Limburgerhof (DE)

(56) Entgegenhaltungen:
- EP-A- 0 259 581
- DE-A- 3 427 220
- DE-A- 3 627 456
- DE-A- 3 730 781
- US-A- 2 533 204
- US-A- 4 663 408

## Beschreibung

Die vorliegende Erfindung betrifft Copolymere, die die Viskosität von wäßrigen Lösungen oder Aufschlämmungen, insbesondere von elektrolythaltigen wäßrigen Lösungen oder Aufschlämmungen, erhöhen und deren Verwendung.

Es gibt eine Vielzahl von industriellen Anwendungen, bei denen wäßrige Lösungen oder Aufschlämmungen mit erhöhter Viskosität eingesetzt werden. So wird beispielsweise bei Öl- und Gasbohrungen die Viskosität der Bohrspülflüssigkeit durch entsprechende Zusätze eingestellt. Bei der Bohrlochzementation muß ebenfalls die Viskosität der Zementschlämme und deren Wasserabgabe an die Formation eingestellt werden. Auch bei den sogenannten Frac-Behandlungen, bei denen bei der Ölförderung zur Erhöhung der Formationspermeabilität entweder Stützmittel oder starke Säuren unter hohem hydraulischem Druck in die Formation eingepreßt werden, werden, um ein Sedimentieren der Stützmittel zu verhindern bzw. die Reaktionsgeschwindigkeit der Säure mit dem Gestein zu erniedrigen, der wäßrigen Phase Mittel zugesetzt, die deren Viskosität erhöhen. Auch bei der tertiären Erdölförderung ist es erforderlich, dem Flutwasser Substanzen zuzusetzen, die dessen Viskosität erhöhen, um einen vorzeitigen Wasserdurchbruch (fingering) zu verhindern und den Entölungsgrad zu erhöhen.

An die viskositätserhöhenden Mittel werden bei den obigen Anwendungen eine Reihe von Anforderungen gestellt. So müssen sie beispielsweise ihre Wirksamkeit bei erhöhten Temperaturen, hohen Salzgehalten sowie im sauren oder basischen Milieu beibehalten.

In den meisten Fällen werden natürliche, halbsynthetische oder synthetische Polymere zur Erhöhung der Viskosität wäßriger Lösungen oder Aufschlämmungen eingesetzt. Bei den natürlichen und halbsynthetischen Polymeren handelt es sich meist um Polysaccharide und deren Derivate wie z.B. Hydroxyethylcellulose, Carboxymethylcellulose, Xanthan, Guar oder Hydroxypropylguar. Bei den synthetischen Polymeren sind hydrolysierte Polyacrylamide bzw. Copolymere aus Acrylamid und Salzen der Acrylsäure die am häufigsten verwendeten Mittel. Während die viskositätserhöhende Wirkung der Biopolymeren meist nur wenig vom Elektrolytgehalt der wäßrigen Lösung abhängt, sind diese Polymere wenig temperaturstabil und werden zudem relativ leicht biologisch abgebaut. Polymere auf Basis von teilverseiftem Polyacrylamid sind resistent gegen biologischen Abbau und hydrolysestabiler als die Biopolymeren. Das Viskositätsniveau ist jedoch sehr stark vom Elektrolytgehalt der wäßrigen Lösung abhängig in der Weise, daß bei Salzzusatz die Viskosität zusammenbricht. Die negativen Ladungen entlang der Polymerkette, die aufgrund der gegenseitigen Abstoßung für die Vergrößerung des hydrodynamischen Volumens und dadurch für die Viskositätserhöhung verantwortlich sind, werden durch die Elektrolyte soweit abgeschirmt, daß das Knäuel kollabiert und die viskositätserhöhende Wirkung zusammenbricht. Bei Anwesenheit von Erdalkalimetallionen neigen hydrolysierte Polyacrylamidlösungen zudem zu Ausfällungen, was deren generelle Einsetzbarkeit drastisch einschränkt. Wäßrige Lösungen, die Homopolymerisate des Acrylamids enthalten, geben mit Erdalkalimetallionen keine Ausfällungen und das Viskositätsniveau reagiert kaum auf Salzzusatz, das Viskositätsniveau ist jedoch generell relativ gering.

In den US-Patenten 4 528 348, 4 612 332, 4 663 408, 4 694 046, 4 702 319 und 4 709 759 werden bereits wasserlösliche Copolymere mit viskositätserhöhender Wirkung beschrieben, die aus unterschiedlichen Mischungen wasserlöslicher Monomerer und einem wasserunlöslichen N-alkylsubstituierten Acrylamid hergestellt werden. Die Polymerisation erfolgt in Mikroemulsion. Nachteilig ist bei diesem Verfahren die relativ große Tensidmenge, die nötig ist, um das hydrophobe Monomer zu solubilisieren. Die Isolation des Polymeren ist durch den Tensidgehalt erschwert.

Die US-Patentschrift 4 541 935 beschreibt Copolymere aus wasserlöslichen Monomeren und wasserunlöslichen langkettigen (Meth)acrylsäureestern. Auch hier wird zum Solubilisieren eine große Tensidmenge benötigt. Zudem ist das hydrophobe Monomere aufgrund seiner Esterstruktur relativ leicht verseifbar.

In der US-Patentschrift 4 728 696 werden Copolymere aus wasserlöslichen Monomeren und einem amphiphilen Monomer auf Acrylamidbasis beschrieben. Das amphiphile Monomer enthält neben der hydrophoben Gruppe Polyoxyethyleneinheiten und ist dadurch wasserlöslich.

Die DE-OS 3 627 456 beschreibt Copolymere aus Acrylamid, einem Salz der Acrylsäure und einem amphiphilischen Monomeren, welches eine (Meth)acrylgruppe und eine ionische polare Gruppe, insbesondere eine Sulfonsäuregruppe enthält. Die Viskositäten der Polymerlösungen nehmen bei steigendem Salzgehalt jedoch drastisch ab.

Die EP-A1-0 311 799 beschreibt Polymere aus zwei wasserlöslichen Monomeren und einem wasserunlöslichen Monomer, wobei Dodecylacrylat besonders bevorzugt ist.

Aus EP-A2-0 335 624 sind Copolymere aus wasserlöslichen Monomeren und Monomeren mit mindestens einer C₈- bis C₃₀-Alkyl-, -Alkenyl- oder -Alkylarylgruppe bekannt. Das die lipophile Gruppe tragende Monomer ist vorzugsweise ein kationisches Acrylderivat.

Die beschriebenen Polymere sind alle insofern nachteilig, daß ihre Lösungen ein zu niedriges Viskositätsniveau ergeben, die Viskosität und Löslichkeit mit steigendem Salzgehalt der Lösung drastisch abnehmen oder die Copolymerisation der wasserunlöslichen mit wasserlöslichen Monomeren nur in organischen Lösungsmitteln oder durch hohen Tensidzusatz möglich wird. Ist die hydrophobe Gruppe über eine Esterbindung mit der vinylischen Einheit verknüpft, sind die Monomeren bei höheren Temperaturen oder pH-Werten nicht genügend hydrolysestabil. Die durch die Assoziation der hydrophoben Seitenketten hervorgerufene Viskositätserhöhung - im Vergleich zu Polymeren ohne solche hydrophoben Gruppen - wird durch das Abhydrolysieren der hydrophoben Gruppen von der Polymerhauptkette wieder zunichte gemacht. Die Verwendung amphiphiler Monomerer mit Alkyl-, Aryl- oder Alkylarylgruppen und Polyalkoxylat-Substrukturen, wie z.B. von Estern aus Acrylsäure und alkoxylierten Alkanolen, birgt zudem die Gefahr der Vernetzung. Bei der Alkoxylierung läßt sich die Bildung von Diolkomponenten nicht ausschließen, so daß bei der Veresterung mit beispielsweise Acrylsäure difunktionelle Monomere entstehen, die zu unlöslichen Anteilen im Polymerisat führen können. Die Verwendung von kationischen Monomeren schließt den Einsatz der Polymerisate für bestimmte Anwendungen, wie z.B. für die tertiäre Erdölförderung, aus, da bekanntermaßen kationische Polymere an dem Formationsgestein bevorzugt adsorbiert werden.

Es bestand daher die Aufgabe, Polymere zu entwickeln, die die Nachteile der bekannten Polymere nicht aufweisen.

Es wurden nun vorteilhafte wassereindickende Copolymere gefunden, erhältlich durch Copolymerisation von
(A) einem oder mehreren Monomeren der allgemeinen Formel I,

   R¹HC=CR²R³ I,

   in der
   - R¹ und R²: gleich oder verschieden sein können und für den Rest H oder C₁- bis C₅-Alkyl, vorzugsweise C₁- bis C₃-Alkyl, insbesondere Methyl, stehen und

   - R³: die Reste 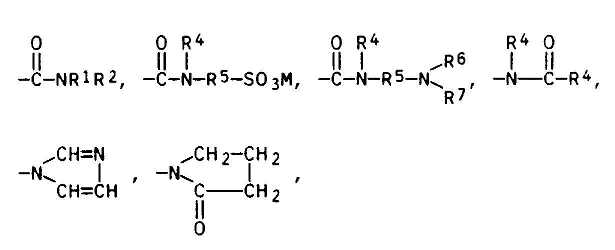 -COOM, -PO₃M₂, -SO₃M
   bedeuten,
   wobei
   - R¹ und R²: gleich oder verschieden sein können und für den Rest H oder C₁- bis C₅-Alkyl, vorzugsweise C₁- bis C₃-Alkyl, insbesondere Methyl, stehen,
   - R⁴: den Rest H oder C₁- bis C₅-Alkyl, vorzugsweise C₁- bis C₃-Alkyl, insbesondere Methyl, bedeutet,
   - R⁵: einen C₁- bis C₄-Alkylenrest bedeutet,
   - R⁶ und R⁷: gleich oder verschieden sein können und für den Rest H oder C₁- bis C₃-Alkyl, vorzugsweise Methyl, stehen und
   - M: Wasserstoff, Alkali-, ¹/₂ Erdalkali- oder Ammonium-Ion bedeutet,
   und
(B) einem oder mehreren Monomeren der allgemeinen Formeln IIa und/oder IIb

   XR¹C=CR²Y IIa,

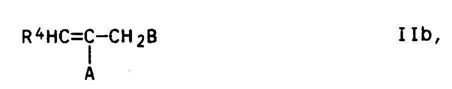

   worin
   - R¹ und R²: gleich oder verschieden sein können und für den Rest H oder C₁- bis C₅-Alkyl, vorzugsweise C₁- bis C₃-Alkyl, insbesondere Methyl, stehen und
   - R⁴: den Rest H oder C₁- bis C₅-Alkyl, vorzugsweise C₁- bis C₃-Alkyl, insbesondere Methyl, bedeutet,
   - X: -COOM bedeutet, wobei M für Wasserstoff, Alkali-, ¹/₂ Erdalkali- oder Ammonium-Ion steht,
   - Y: 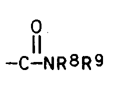 bedeutet, wobei R⁸ für eine C₆- bis C₃₀-Alkyl-, Alkylaryl- oder Arylgruppe steht und R⁹ für den Rest H, eine C₁- bis C₃₀-Alkyl-, Alkylaryl- oder Arylgruppe steht, und
   - A und B: verschieden sind und jeweils die Bedeutung von X oder Y haben.

Die erfindungsgemäßen Copolymeren werden durch Copolymerisation von einem oder mehreren Monomeren A mit einem oder mehreren Monomeren B erhalten.

Als Monomere A, d.h. als Monomere der allgemeinen Formel I, kommen z.B. in Betracht Acrylamid, Acrylsäure und deren Salze, Acrylamidomethylpropansulfonsäure (AMPS) und deren Salze, Dimethylaminopropylmethacrylamid, Methacrylsäure und deren Salze, Methacrylamid, N-Vinylformamid, N-Vinylacetamid, N-Vinylimidazol, N-Vinylpyrrolidon, Vinylphosphonsäure und deren Salze, Vinylsulfonsäure und deren Salze. Vorzugsweise werden Acrylamid und Acrylsäure und deren Salze, besonders bevorzugt Acrylamid und AMPS und deren Salze verwendet.

Als Monomere B, d.h. als Monomere der allgemeinen Formeln IIa und IIb, seien beispielsweise genannt die N-C₆- bis C₃₀-Alkyl-, N-Alkylaryl- oder N-Aryl-substituierten Monoamide von Malein-, Fumar-, Itacon- oder Citraconsäure bzw. deren Alkali-, Erdalkali- oder Ammoniumsalze. Geeignete Alkylaryl- bzw. Arylgruppen sind z.B. Phenyl, Naphthyl, Benzyl, Nonylphenyl.

Die N-substituierten Monoamide der Malein-, Citracon- und Itaconsäure sind in besonders einfacher Weise zugänglich, z.B. indem man die Anhydride mit einem Unterschuß an dem betreffenden Amin, z.B. in Mengen von 0,5 bis 0,99 Mol, vorzugsweise 0,7 bis 0,9 Mol Amin pro Mol des Dicarbonsäureanhydrids, zweckmäßig in Gegenwart einer Hilfsbase, beispielsweise Pyridin, umsetzt. Die Monoamide sind in der Säureform in organischen Lösungsmitteln, z.B. Methylenchlorid, jedoch nicht in Wasser löslich, so daß sie durch Behandeln, z.B. durch Ausschütteln, mit wäßrigen Säuren, z.B. Salzsäure oder Schwefelsäure, in Gegenwart eines organischen Lösungsmittels, leicht isoliert werden können. Durch Umkristallisieren aus organischen Lösungsmitteln, z.B. Methylenchlorid, können die Monoamide in hoher Reinheit und frei von Ammoniumsalzen erhalten werden.

Die erfindungsgemäßen Copolymeren enthalten im allgemeinen 50 bis 99,99 Gew.% Monomere A und 0,01 bis 50 Gew.% Monomere B, vorzugsweise 80 bis 99,9 Gew.% Monomere A und 0,1 bis 20 Gew.% Monomere B, insbesondere 85 bis 99 Gew.% Monomere A und 1 bis 15 Gew.% Monomere B, jeweils bezogen auf die im Copolymeren enthaltene Gesamtmenge an Monomeren A und B.

Im allgemeinen bestehen die Copolymeren aus den Monomeren A und B. Bevorzugt sind dabei Salze von Copolymeren aus Acrylamid und N-Alkylmaleinsäuremonoamiden sowie von Terpolymeren aus Acrylamid, Acrylsäure und N-Alkylmaleinsäuremonoamiden sowie aus Acrylamid, Acrylamidomethylpropansulfonsäure und N-Alkylmaleinsäuremonoamiden.

Die Copolymeren können jedoch noch zusätzlich 0 bis 20 Gew.%, vorzugsweise 0 bis 10 Gew.%, bezogen auf die Monomeren A, andere, vorzugsweise polare Gruppen enthaltende Monomeren, z.B. Acrylnitril, Acrylsäure-C₁-C₃-alkylester wie Acrylsäuremethylester, Vinylacetat, enthalten.

Die erfindungsgemäßen Polymerisate können weiter zusätzlich 0 bis 5 Gew.%, vorzugsweise 0 bis 3 Gew.% mehrfunktionelle vinylische Monomere, z.B. N,N'-Divinylethylenharnstoff, Methylenbis(meth)acrylamid, Trimethylolpropantrisallylether, Trimethylolpropantriacrylat, Oligoalkylenglykoldiacrylate, Polyalkylenglykoldiacrylate, Butandioldiacrylat, Hexandioldiacrylat enthalten. Dadurch werden vernetzte Produkte erhalten, die bei Zusatz von geringen Mengen dieser Vernetzer wasserlöslich bleiben, bei Zusatz von höheren Vernetzermengen stark quellende Gele bilden. Die Quellbarkeit dieser Gele bleibt auch in elektrolythaltigem Wasser bestehen. Erfindungsgemäße Polymere, die vernetzt sind, eignen sich besonders zur Verdickung von Druckpasten oder zur Herstellung von Superabsorbern, die zum Aufsaugen elektrolythaltiger wäßriger Flüssigkeiten eingesetzt werden können.

Im allgemeinen liegen die K-Werte der erfindungsgemäßen Polymerisate (nach H. Fikentscher, Cellulosechemie, Bd. 13, S. 58-64 und 71-74 (1932)) zwischen 50 und 300 (0,1 %ig in 5 %iger Kochsalzlösung), bevorzugt zwischen 70 bis 300. Der besonders bevorzugte Bereich hängt von der Art der Verwendung der erfindungsgemäßen Copolymeren ab. Bei ihrer Verwendung als Verdicker beim Polymerfluten und bei Frac-Behandlungen liegt er zwischen 180 und 290. Bei ihrer Verwendung als Zusatz zu Tiefbohrzementschlämmen und Bohrspülflüssigkeiten liegt der bevorzugte K-Wert-Bereich zwischen 80 und 150.

Die Herstellung der erfindungsgemäßen Copolymeren erfolgt nach bekannten üblichen diskontinuierlichen und kontinuierlichen Polymerisationsverfahren wie Substanz-, Lösungs-, Fällungs-, Suspensions- und Emulsionspolymerisation und Initiierung mit üblichen Radikalspendern wie beispielsweise Acetylcyclohexansulfonylperoxid, Diacetylperoxidicarbonat, Dicyclohexylperoxidicarbonat, Di-2-ethylhexylperoxidicarbonat, tert.-Butylperneodecanoat, 2,2'-Azobis(4-methoxy-2,4-dimethylvaleronitril), tert.-Butylpermaleinat, 2,2'-Azobis(isobutyronitril), 2,2'-Azobis(2-amidinopropan)dihydrochlorid, Bis-(tert.-butylperoxid)cyclohexan, tert.-Butylperoxiisopropylcarbonat, tert.-Butylperacetat, Dicumylperoxid, Di-tert.-amylperoxid, Di-tert.-butylperoxid, p-Methanhydroperoxid, Cumolhydroperoxid, Natrium-, Kalium-, Ammoniumperoxodisulfat und tert.-Butylhydroperoxid und Mischungen untereinander. üblicherweise werden diese Initiatoren in Mengen von 0,1 bis 10 Gew.%, vorzugsweise 0,2 bis 5 Gew.%, berechnet auf die Monomeren, eingesetzt.

Vorzugsweise erfolgt die Herstellung der Copolymeren durch Lösungspolymerisation, die bevorzugt in Wasser als Lösungsmittel durchgeführt wird, wobei vorzugsweise alle Monomeren in homogener Phase in Lösung vorliegen. Es kann vorteilhaft sein, dem wäßrigen Lösungsmittel 0 bis 30 Gew.%, vorzugsweise 0 bis 20 Gew.%, bezogen auf das gesamte Lösungsmittelgemisch, eines wasserlöslichen organischen Lösungsmittels als Lösevermittler oder zum Einstellen eines bestimmten Molekulargewichts zuzusetzen. Geeignete organische Lösungsmittel sind z.B. Alkohole wie Methanol, Ethanol, Isopropanol, tert.-Butanol, Ketone wie Aceton, Ether wie Dioxan, Tetrahydrofuran, Dimethylformamid, N-Methylpyrrolidon, Dimethylsulfoxid. Anstelle von Lösungsmitteln mit regelnder Wirkung können auch kettenübertragende Verbindungen, z.B. Ammoniumformiat, Hydroxylammoniumchlorid, zum Einstellen eines bestimmten Molekulargewichts verwendet werden. Die Polymerisation erfolgt in der Regel im schwach sauren, neutralen oder schwach alkalischen Bereich, zweckmäßig bei pH-Werten von 5 bis 10, vorzugsweise 6 bis 9. Erfolgt die Polymerisation in reinem Wasser, liegt der pH-Wert bevorzugt im neutralen bis schwach alkalischen Bereich, im allgemeinen bei pH-Werten von 6 bis 10, vorzugsweise 6,5 bis 9. Zweckmäßig wird der pH-Wert so eingestellt, daß alle Monomeren einschließlich der die hydrophobe Gruppe tragenden Monomeren B in Lösung bleiben.

Mit besonderem Vorteil erfolgt die Herstellung der erfindungsgemäßen Copolymeren nach der sogenannten Gelpolymerisation, einem Spezialfall der Lösungsmittelpolymerisation, bei der der sogenannte Geleffekt ausgenutzt wird, um hohe Molekulargewichte zu erhalten. Die Gelpolymerisation wird zweckmäßig in der Weise durchgeführt, daß eine von Sauerstoff befreite Monomerlösung mit einem Monomergehalt von im allgemeinen 5 bis 50 Gew.%, bevorzugt 7 bis 40 Gew.%, insbesondere 10 bis 30 Gew.% Monomeren zusammen mit dem Initiator unter Inertgasatmosphäre auf die gewünschte Polymerisationstemperatur gebracht wird. Nach Einsetzen der Polymerisationsreaktion bildet sich zunächst eine viskose Lösung, die schließlich in ein festes Polymergel übergeht.

Es ist ein besonderer Vorteil der vorliegenden Erfindung, daß gemäß der erfindungsgemäßen Herstellung der Copolymeren wasserlösliche Polymerisate mit genügend hohen Molekulargewichten, wie sie für die Anwendung als viskositätserhöhende Mittel für wäßrige Elektrolytlösungen benötigt werden, erhalten werden.

Ein weiterer Vorteil der vorliegenden Erfindung besteht darin, daß die Copolymerisation ohne Zusatz von Tensiden durchgeführt werden kann. Die erhaltenen Copolymeren sind somit frei von Tensiden. Dies ist ein wesentlicher Vorteil gegenüber Polymerisationsverfahren, bei denen aufgrund der Löslichkeitsunterschiede der verwendeten Monomeren Tenside zugesetzt werden müssen, da die Abtrennung der Tenside nach erfolgter Polymerisation in der Regel sehr aufwendig ist.

Die Polymerisation erfolgt zweckmäßig bei Temperaturen zwischen 0 und 150°C, vorzugsweise zwischen 10 und 100°C, insbesondere zwischen 20 und 80°C.

Die erfindungsgemäßen Copolymeren finden beispielsweise Verwendung als viskositätserhöhende Mittel bei der tertiären Erdölförderung, als Zusatz zu wasserbasischen Bohrspülungen, als Zusatz zu Tiefbohrzementschlämmen sowie als viskositätserhöhende Mittel bei sogenannten Frac-Behandlungen, bei denen bei der Erdölförderung zur Erhöhung der Formationspermeabilität entweder Stützmittel oder starke Säuren unter hohem hydraulischem Druck in die erdölführende Formation eingepreßt werden (vgl. z.B. "Das Buch vom Erdöl", S. 76, Deutsche BP AG Hamburg, 1989 und US-Patentschrift 4 500 437).

Die erfindungsgemässen Copolymeren finden ebenfalls Verwendung als Verdickungsmittel für Druckpasten sowie als Superabsorber für elektrolythaltige wässrige Lösungen.

Die Erfindung wird durch die folgenden Beispiele näher erläutert:

### I. Herstellungsbeispiele

1. Herstellung von Monomeren gemäß der allgemeinen Formel IIa
   a) Herstellung von N-Dodecylmaleinsäuremonoamid
      Zu einer Lösung aus 83 g Maleinsäureanhydrid von 700 ml Dichlormethan werden bei Raumtemperatur 30 g Pyridin zugegeben. Danach tropft man eine Lösung von 122 g n-Dodecylamin und 70 g Pyridin in 800 ml Dichlormethan innerhalb von 15 min zu, wobei die Temperatur auf 39°C ansteigt. Danach wird 30 min am Rückfluß gekocht, auf 25°C abgekühlt und 210 ml 32 gew.-%ige wäßrige Salzsäure vorsichtig zugegeben. Die wäßrige Phase wird bei 35°C abgetrennt, dreimal mit je 200 ml Wasser bei 35°C gewaschen, die organische Phase über Natriumsulfat getrocknet und bei 10°C kristallisiert. Man erhält 180 g (96 %) N-Dodecylmaleinsäuremonoamid in Form farbloser, wachsartiger Kristalle. Das Produkt ist NMR-rein und in verdünnter Natronlauge klar löslich.
   b) Herstellung von N-C₈/C₁₈-Alkylmaleinsäuremonoamid
      Man verfährt wie in Beispiel 1.a) beschrieben, wobei jedoch 50 g Maleinsäureanhydrid, 91 g einer C₈- bis C₁₈-Alkylaminmischung (Noram Cd der Firma Ceca) und insgesamt 60 g Pyridin und 1000 ml Dichlormethan verwendet werden. Man erhält 103 g N-C₈- bis C₁₈-Alkylmaleinsäuremonoamid in einer Ausbeute von 77 %. Das Produkt ist NMR-rein und in verdünnter Natronlauge klar löslich.
2. Herstellung der erfindungsgemäßen Copolymeren
   a) Herstellung des Polymer A 1
      1,57 g N-Dodecylmaleinsäuremonoamid aus Beispiel 1.a) werden in 50 g Wasser suspendiert und bei 25°C mit 25 gew.-%iger wäßriger Natronlauge tropfenweise versetzt, bis alles Monoamid in Lösung gegangen ist. Dabei darf der pH-Wert 10 nicht übersteigen. Zu dieser Lösung gibt man 160 g 50 gew.-%ige Acrylamidlösung, 410 g Wasser, 95 mg einer 40 gew. -%igen Lösung des Pentanatriumsalzes der Diethylentriaminpentaessigsäure sowie als Entschäumer 80 mg Silikonöl (VP 1132 der Firma Wacker-Chemie). Nach Einstellen des pH-Wertes auf 8,5 wird die Lösung auf 40 bis 45°C erwärmt und dreimal durch Evakuieren und Belüften mit Stickstoff entgast. Danach wird weitere 30 min Stickstoff durchgeleitet. Anschließend werden als Initiator 8 ml einer 0,2 gew.-%igen wäßrigen Lösung von 2,2'-Azobis(2-amidinopropan)dihydrochlorid zugegeben. Nach 1 bis 2 Stunden, wenn der Absatz eben noch rührbar ist, werden weitere 10 ml der Initiatorlösung zugesetzt, und es wird bei 50 bis 60°C weitere 5 Stunden auspolymerisiert. Man erhält Polymer A 1 als ein ca. 12,5 gew.-%iges klares Polymergel. Polymer A 1 besteht, bezogen auf die Säureform, zu ca. 98,1 Gew.-% aus Acrylamid und zu 1,9 Gew.-% (0,5 Mol%) aus N-Dodecylmaleisäuremonoamid.
   b) Herstellung von Polymer B 1
      1,38 g N-Dodecylmaleinsäuremonoamid aus Beispiel 1. a) werden in 50 g Wasser suspendiert und bei 25°C mit 25 gew.-%iger wäßriger Natronlauge tropfenweise versetzt, bis alles Monoamid in Lösung gegangen ist. Dabei darf der pH-Wert 10 nicht übersteigen. Zu dieser Lösung gibt man 128 g 50 gew.-%iger Acrylamidlösung, eine Lösung von 15,8 g Acrylamidmethylpropansulfonsäure (AMPS) in 100 g 3 gew.-%iger wäßriger Natronlauge, 310 g Wasser, 95 mg einer 40 gew.-%igen Lösung des Pentanatriumsalzes der Diethylentriaminpentaessigsäure sowie als Entschäumer 80 mg Silikonöl (VP 1132 der Firma Wacker-Chemie). Nach Einstellen des pH-Wertes auf 8,5 wird die Lösung auf 45 bis 50°C erwärmt und dreimal durch Evakuieren und Belüften mit Stickstoff entgast. Anschließend wird weitere 30 min Stickstoff durchgeleitet. Danach werden 8 ml einer 0,2 gew.-%igen Initiatorlösung von 2,2'-Azobis(2-amidinopropan)dihydrochlorid zugegeben. Nach 1 bis 2 Stunden, wenn der Absatz eben noch rührbar ist, werden weitere 10 ml Initiatorlösung zugesetzt, und es wird bei 50 bis 60°C weitere 5 Stunden auspolymerisiert. Man erhält Polymer B 1 als ein ca. 12,5 gew.-%iges klares Polymergel. Polymer B 1 besteht, bezogen auf die Säureform, zu ca. 78,6 Gew.-% aus Acrylamid zu ca. 19,7 Gew.-% aus AMPS und zu 1,68 Gew.-% (0,5 Mol.-%) aus N-Dodecylmaleinsäuremonoamid.
   c) Herstellung weiterer Polymeren
      Die in der folgenden Tabelle 1 aufgelisteten Polymeren wurden analog den Beispielen für Polymer A 1 und B 1 hergestellt. Die Zahlenwerte in der Tabelle 1 geben die Zusammensetzung der Polymeren A 0-6, B 0-6, C 0, C 2, D 0 und D 2 in Gew.-% an.
      Die jeweils mit "0" bezeichneten Versuche sind Vergleichsbeispiele, die unter denselben Bedingungen wie alle anderen Polymeren hergestellt wurden, die jedoch keine Monomeren mit hydrophoben Seitenketten enthalten.

**Tabelle 1**

| Polymer | AM | AMPS | AS | MS-12 | MS-8/18 |
|---|---|---|---|---|---|
| A 0 | 100 | - | - | - | - Vergleichspolymer |
| A 1 | 98,1 | - | - | 1,9 | - |
| A 2 | 96,2 | - | - | 3,8 | - |
| A 3 | 92,7 | - | - | 7,3 | - |
| A 4 | 97,9 | - | - | - | 2,1 |
| A 5 | 95,9 | - | - | - | 4,1 |
| A 6 | 92,1 | - | - | - | 7,9 |
| B 0 | 80 | 20 | - | - | - Vergleichspolymer |
| B 1 | 78,6 | 19,7 | - | 1,7 | - |
| B 2 | 77,4 | 19,3 | - | 3,3 | - |
| B 3 | 75,1 | 18,8 | - | 6,1 | - |
| B 4 | 78,6 | 19,6 | - | - | 1,8 |
| B 5 | 77,1 | 19,3 | - | - | 3,6 |
| B 6 | 74,5 | 18,6 | - | - | 6,9 |
| C 0 | 90 | - | 10 | - | - Vergleichspolymer |
| C 2 | 86,8 | - | 9,6 | 3,6 | - |
| D 0 | 80 | - | 20 | - | - Vergleichspolymer |
| D 2 | 86,8 | - | 9,6 | 3,6 | - |

Die Abkürzungen haben folgende Bedeutung:
- AM: = Acrylamid
- AMPS: = Acrylamidomethylpropansulfonsäure
- AS: = Acrylsäure
- MS-12: = N-Dodecylmaleinsäuremonoamid (aus Beispiel 1.a))
- MS-8/18: = N-C₈/C₁₈-Alkylmaleinsäuremonamid (aus Beispiel 1.b))

### II. Anwendungsbeispiele

Aus den Polymergelen wurden durch intensives Rühren bei 80°C 1,0 gew.-%ige Lösungen hergestellt. Diese wurden mit
a) der gleichen Menge Wasser (Lösung a)
b) der gleichen Menge 20 gew.-%iger wäßriger NaCl-Lösung (Lösung b) auf 0,5 Gew.-% verdünnt, und die Viskositäten der Lösungen wurden bei verschiedenen Schergeschwindigkeiten in einem Brookfield RTV C/P Viskosimeter mit Spindel CP-41 bei Raumtemperatur (23°C) bestimmt. Die erhaltenen Werte sind in Tabelle 2 aufgeführt.

**Tabelle 2**

| Viskositäten in mPas in Abhängigkeit von der Scherrate und der Salinität | | | | | | |
|---|---|---|---|---|---|---|
| Scherrate 1/s Polymer | Lösung a (0,5 gew.-%ig in Wasser) | | | Lösung b (0,5 gew.-%ig in 10 gew.-%iger NaCl-Lösung) | | |
| | 1,0 | 10 | 40 | 1,0 | 10 | 40 |
| A 0 | 738 | 258 | 116 | 443 | 185 | 92 |
| A 1 | 738 | 246 | 123 | 1230 | 308 | 150 |
| A 2 | 787 | 283 | 140 | 3075 | 664 | 275 |
| A 3 | 738 | 258 | 135 | 4920 | 1230 | 509 |
| A 4 | 1230 | 369 | 166 | 1353 | 369 | 166 |
| A 5 | 2460 | 640 | 248 | 2960 | 492 | 226 |
| A 6 | 2830 | 664 | 295 | 3695 | 622 | 485 |
| B 0 | 3075 | 690 | 261 | 172 | 98 | 61 |
| B 1 | 2830 | 665 | 257 | 615 | 221 | 123 |
| B 2 | 3321 | 738 | 287 | 1476 | 418 | 201 |
| B 3 | 2583 | 566 | 224 | 2460 | 590 | 246 |
| B 4 | 2952 | 689 | 270 | 984 | 283 | 147 |
| B 5 | 4180 | 900 | 280 | 1910 | 445 | 206 |
| B 6 | 4550 | 920 | 330 | 2950 | 550 | 260 |
| C 0 | 3440 | 790 | 310 | 369 | 160 | 89 |
| C 2 | 4080 | 886 | 332 | 1230 | 369 | 184 |
| D 0 | 5660 | 1107 | 390 | 246 | 148 | 80 |
| D 2 | 5166 | 1033 | 400 | 738 | 271 | 141 |
| Xanthan | 1722 | 418 | 154 | 2706 | 566 | 203 |

Beim Vergleich von A 1 bis A 6 mit dem Vergleichsbeispiel A 0 erkennt man deutlich das beträchtlich höhere Viskositätsniveau der erfindungsgemäßen Polymere, welches vor allem in konzentrierten Elektrolytlösungen zum Tagen kommt. Generell wird ein kräftiger Viskositätsanstieg beim Übergang von Wasser zu NaCl-Lösung beobachtet. Bei den Polymeren B, C und D wird beim Übergang von Wasser zu NaCl-Lösung ein deutlicher Viskositätsabfall beobachtet, der durch den stärker ionischen Charakter dieser Polymeren bedingt ist. Der Viskositätsabfall bei den erfindungsgemäßen Beispielen ist jedoch wesentlich geringer als bei den Vergleichsbeispielen. Wie das Beispiel des Polymeren B 3 zeigt, ist es jedoch möglich, durch Kombination von ionischem Anteil und Menge an Monomeren gemäß den Formeln IIa bzw. IIb ein Polymer herzustellen, dessen Viskositäten in NaCl-Lösung und in reinem Wasser kaum Unterschiede zeigen.

Wegen des Einpolymerisierens der Monomeren MS-12 bzw. MS-8/18 ergibt sich eine stärkere Abhängigkeit der Viskosität von der Scherrate bei den Polymeren A 1-6, B 1-6, C 2 und D 2 als dies bei den Vergleichsversuchen A 0, B 0, C 0 und D 0 der Fall ist. Die stärkere Abhängigkeit von der Scherrate läßt sich in der Weise erklären, daß die Assoziation der von den Monomeren MS-12 bzw. MS-8/18 herrührenden hydrophoben Seitengruppen mit steigender Scherrate schwieriger wird.

In Abhängigkeit von der Scherrate ergeben die erfindungsgemäßen Polymere in NaCl-Lösung bis zu 15fach höhere Viskositäten als die Vergleichsbeispiele. Wie ein Vergleich mit Xanthan (Polysaccharid) zeigt, kann dessen Viskositätsniveau ebenfalls überschritten werden.

## Patentansprüche

1. Wassereindickende Copolymere, erhältlich durch Copolymerisation von
(A) einem oder mehreren Monomeren der allgemeinen Formel I,
R¹HC=CR²R³ I,
in der
R¹ und R² gleich oder verschieden sein können und für den Rest H oder C₁- bis C₅-Alkyl stehen und
R³ die Reste 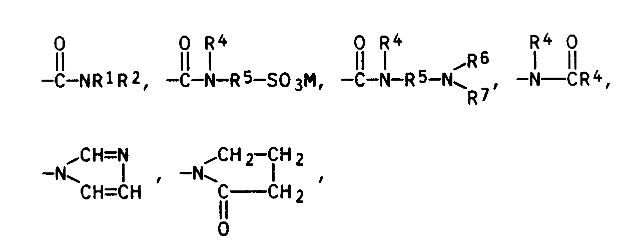 -COOM, -PO₃M₂, -SO₃M
bedeuten,
wobei
R¹ und R² gleich oder verschieden sein können und für den Rest H oder C₁- bis C₅-Alkyl stehen,
R⁴ den Rest H oder C₁- bis C₅-Alkyl bedeutet,
R⁵ einen C₁- bis C₄-Alkylenrest bedeutet,
R⁶ und R⁷ gleich oder verschieden sein können und für den Rest H oder C₁- bis C₃-Alkyl stehen und
M Wasserstoff, Alkali-, ¹/₂ Erdalkali- oder Ammonium-Ion bedeutet,
und
(B) einem oder mehreren Monomeren der allgemeinen Formeln IIa und/oder IIb
XR¹C=CR²Y IIa, 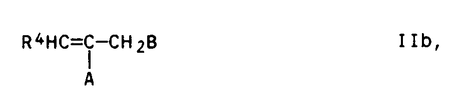
worin
R¹ und R² gleich oder verschieden sein können und für den Rest H oder C₁- bis C₅-Alkyl stehen und
R⁴ den Rest H oder C₁- bis C₅-Alkyl bedeutet,
X -COOM bedeutet, wobei M für Wasserstoff, Alkali-, ¹/₂ Erdalkali- oder Ammonium-Ion steht,
Y 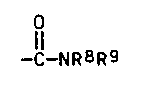 bedeutet, wobei R⁸ für eine C₆- bis C₃₀-Alkyl-, Alkylaryl- oder Arylgruppe steht und R⁹ für den Rest H, eine C₁- bis C₃₀-Alkyl-, Alkylaryl- oder Arylgruppe steht, und
A und B verschieden sind und jeweils die Bedeutung von X oder Y haben.

2. Copolymere gemäß Anspruch 1, enthaltend 50 bis 99,99 Gew.% Monomeren A und 0,01 bis 50 Gew.% Monomeren B.

3. Copolymere gemäß den Ansprüchen 1 bis 2, dadurch gekennzeichnet, daß als Monomere A Acrylamid und/oder Acrylsäure und/oder deren Salze und als Monomere B N-Alkylmaleinsäuremonoamide und/oder deren Salze für die Copolymerisation eingesetzt werden.

4. Copolymere gemäß Ansprüchen 1 bis 2, dadurch gekennzeichnet, daß als Monomeren A Acrylamid und Acrylamidomethylpropansulfonsäure und als Monomere B N-Alkylmaleinsäuremonoamide und/oder deren Salze für die Copolymerisation eingesetzt werden.

5. Copolymere gemäß den Ansprüchen 1 bis 4, dadurch gekennzeichnet, daß sie zusätzlich als Monomere mehrfunktionelle vinylische Monomere in Mengen von 0 bis 5 Gew.%, bezogen auf die Gesamtmenge der Monomeren A und B enthalten.

6. Verfahren zur Herstellung der Copolymeren gemäß den Ansprüchen 1 bis 5, dadurch gekennzeichnet, daß man ein oder mehrere Monomere A mit einem oder mehreren Monomeren B, gegebenenfalls unter Zusatz von 0 bis 5 Gew.%, bezogen auf die Gesamtmenge der Monomeren A und B, eines oder mehrerer mehrfunktioneller vinylischer Monomere, copolymerisiert.

7. Verfahren zur Herstellung der Copolymeren gemäß den Ansprüchen 1 bis 6, dadurch gekennzeichnet, daß die Copolymerisation als radikalische Lösungspolymerisation in einem Lösungsmittelgemisch aus 70 bis 100 Gew.% Wasser und 0 bis 30 Gew.% eines wasserlöslichen organischen Lösungsmittels durchgeführt wird.

8. Verwendung der Copolymeren gemäß den Ansprüchen 1 bis 5 als viskositätserhöhende Mittel bei der tertiären Erdölförderung, als Zusatz zu wasserbasischen Bohrspülungen, als Zusatz zu Tiefbohrzementschlämmen oder als viskositätserhöhende Mittel bei Frac-Behandlungen.

9. Verwendung der Copolymeren gemäß Anspruch 5 als Verdickungsmittel für Druckpasten.

10. Verwendung der Copolymeren gemäß Anspruch 5 als Superabsorber für elektroythaltige wäßrige Lösungen.

## Claims

1. A water-thickening copolymer obtainable by copolymerization of
(A) one or more monomers of the formula I
R¹HC=CR²R³ I
where
R¹ and R² can be identical or different and each is H or C₁-C₅-alkyl, and
R³ is 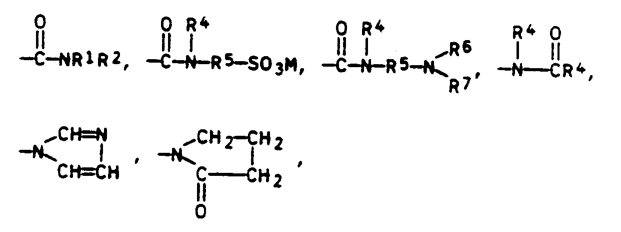 -COOM, -PO₃M₂, -SO₃M
where
R¹ and R² can be identical or different and each is H or C₁-C₅-alkyl,
R⁴ is H or C₁-C₅-alkyl,
R⁵ is C₁-C₄-alkylene,
R⁶ and R⁷ can be identical or different and each is H or C₁-C₃-alkyl, and
M is hydrogen or an alkali metal, 1/2 an alkaline earth metal or ammonium ion, and
(B) one or more monomers of the formula IIa and/or IIb
XR¹C=CR²Y IIa 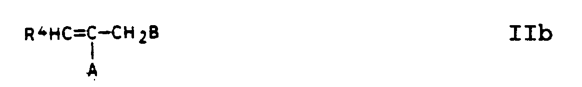
where
R¹ and R² can be identical or different and each is H or C₁-C₅-alkyl,
R⁴ is H or C₁-C₅-alkyl,
X is -COOM where M is hydrogen or alkali metal, 1/2 alkaline earth metal or ammonium ion,
Y is 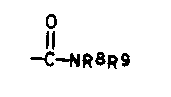 where R⁸ is C₆-C₃₀-alkyl, alkylaryl or aryl and R⁹ is H, C₁-C₃₀-alkyl, alkylaryl or aryl, and
A and B are different and each has the meaning of X or Y.

2. A copolymer as claimed in claim 1, containing from 50 to 99.99 % by weight of monomer A and from 0.01 to 50 % by weight of monomer B.

3. A copolymer as claimed in claim 1 or 2, wherein monomer A is acrylamide and/or acrylic acid and/or a salt thereof and monomer B is N-alkylmaleamic acid and/or a salt thereof.

4. A copolymer as claimed in claim 1 or 2, wherein monomers A are acrylamide and acrylamidomethylpropanesulfonic acid and monomer B is N-alkylmaleamic acid and/or a salt thereof.

5. A copolymer as claimed in claims 1 to 4, which additionally contains multifunctional vinylic monomers in amounts of from 0 to 5 % of the total weight of monomers A and B.

6. A process for preparing a copolymer as claimed in claims 1 to 5, which comprises copolymerizing one or more monomers A with one or more monomers B with or without addition of one or more multifunctional vinylic monomers in amounts of from 0 to 5 % of the total weight of monomers A and B.

7. A process for preparing a copolymer as claimed in claims 1 to 6, which comprises carrying out the copolymerization as a radical solution polymerization in a mixed solvent composed of from 70 to 100 % by weight of water and from 0 to 30 % by weight of a water-soluble organic solvent.

8. The use of the copolymers as claimed in claims 1 to 5 for increasing viscosity in tertiary oil recovery, as additive to water-based drilling fluids, as additive to cement slurries for deep wells or for increasing viscosity in fracturing.

9. The use of the copolymer as claimed in claim 5 for thickening printing pastes.

10. The use of the copolymer as claimed in claim 5 as superabsorber for electrolyte-containing aqueous solutions.

## Revendications

1. Copolymères épaississants dans l'eau, obtenus par copolymérisation de
A) un ou plusieurs monomères de formule générale I
R¹HC=CR²R³ I
dans laquelle
R¹ et R² peuvent être identiques ou différents et sont mis chacun pour le reste H ou pour un radical alkyle en C₁-C₅ et
R³ représente les restes 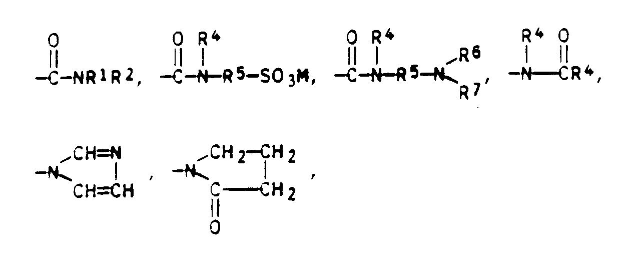 -COOM, -PO₃M₂, -SO₃M
où
R¹ et R² peuvent entre identiques ou différents et sont mis chacun pour le reste H ou pour un radical alkyle en C₁-C₅,
R⁴ représente le reste H ou un radical alkyle en C₁-C₅,
R⁵ représente un radical alkylène en C₁-C₄,
R⁶ et R⁷ peuvent être identiques ou différents et sont mis chacun pour le reste H ou pour un radical alkyle en C₁-C₃ et
M représente un atome d'hydrogène ou un ion alcalin, 1/2 ion alcalino-terreux ou un ion ammonium,
et
B) un ou plusieurs monomères de formules générales IIa et/ou IIb
XR¹C=CR²Y IIa 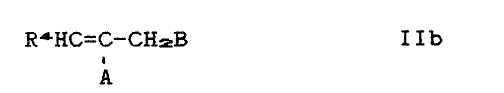
dans laquelle
R¹ et R² peuvent être identiques ou différents et sont mis chacun pour le reste H ou pour un radical alkyle en C₁-C₅,
R⁴ représente le reste H ou un radical alkyle en C₁-C₅,
X représente -COOM, M étant mis pour un atome d'hydrogène ou pour un ion alcalin, 1/2 ion alcalino-terreux ou un ion ammonium,
Y représente 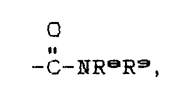 R⁸ étant mis pour un groupement alkyle, alkylaryle ou aryle en C₆-C₃₀ et R⁹ étant mis pour le reste H ou pour un groupement alkyle, alkylaryle ou aryle en C₁-C₃₀, et
A et B sont différents et ont chacun la signification de X ou Y.

2. Copolymères selon la revendication 1, contenant 50 à 99.99% en poids de monomères A et 0,01 à 50% en poids de monomères B.

3. Copolymères selon la revendication 1 ou 2, caractérisés en ce qu'on utilise pour la copolymérisation, en tant que monomères A, de l'acrylamide et/ou de l'acide acrylique et/ou des sels de ceux-ci et, en tant que monomères B, des monoamides d'acide N-alkylmaléique et/ou des sels de ceux-ci.

4. Copolymères selon la revendication 1 ou 2, caractérisés en ce qu'on utilise pour la copolymérisation, en tant que monomères A, de l'acrylamide et de l'acide acrylamidométhylpropanesulfonique et, en tant que monomères B, des mononmides d'acide N-alkylmaléique et/ou des sels de ceux-ci.

5. Copolymères selon l'une quelconque des revendications 1 à 4, caractérisés en ce qu'ils contiennent en plus, en tant que monomères, des monomères vinyliques polyfonctionnels dans des proportions de 0 à 5% en poids par rapport à la quantité totale des monomères A et B.

6. Procédé de préparation des copolymères selon l'une quelconque des revendications 1 à 5, caractérisé en ce qu'on copolymérise un ou plusieurs monomères A avec un ou plusieurs monomères B, éventuellement avec addition de 0 à 5% en poids, par rapport à la quantité totale des monomères A et B, d'un ou de plusieurs monomères vinyliques polyfonctionnels.

7. Procédé de préparation des copolymères selon l'une quelconque des revendications 1 à 6, caractérisé en ce qu'on effectue la copolymérisation sous forme de polymérisation radicalaire en solution, dans un mélange de solvants composé de 70 à 100% en poids d'eau et de 0 à 30% en poids d'un solvant organique soluble dans l'eau.

8. Utilisation des copolymères selon l'une quelconque des revendications 1 à 5 comme agent d'augmentation de la viscosité dans l'extraction de pétrole tertiaire, comme additif de fluides de forage à base d'eau, comme additif de boue au ciment de forage profond ou comme agent d'augmentation de la viscosité dans des traitements de fracturation (frac).

9. Utilisation des copolymères selon la revendication 5 comme épaississant pour des pâtes d'impression.

10. Utilisation des copolymères selon la revendication 5 comme superabsorbant pour des solutions aqueuses contenant des électrolytes.
